# EUROPEAN PATENT SPECIFICATION

(11) **EP 3 435 129 B1**
(45) Date of publication and mention of the grant of the patent: **21.04.2021**
(21) Application number: 17770295.8
(22) Date of filing: 22.03.2017
(51) Int. Cl.: G02B 6/44

(54) **MANUFACTURING METHOD AND MANUFACTURING DEVICE FOR OPTICAL FIBER RIBBON CORE-WIRE**
HERSTELLUNGSVERFAHREN UND HERSTELLUNGSVORRICHTUNG FÜR GLASFASERBANDFÜLLFDRAHT
PROCÉDÉ DE FABRICATION ET DISPOSITIF DE FABRICATION POUR FIL À D'ÂME DE RUBAN DE FIBRE OPTIQUE

(30) Priority: 23.03.2016 JP 2016058707; 31.03.2016 JP 2016070544
(43) Date of publication of application: 30.01.2019
(73) Proprietor: Sumitomo Electric Industries, Ltd., Osaka-shi, Osaka 541-0041 (JP)
(72) Inventor: ISHIKAWA, Hiroki, Yokohama-shi, Kanagawa 244-8588 (JP); SATO, Toshihisa, Yokohama-shi, Kanagawa 244-8588 (JP); SATO, Fumiaki, Yokohama-shi, Kanagawa 244-8588 (JP); ISHIKAWA, Masahiko, Yokohama-shi, Kanagawa 244-8588 (JP)
(74) Representative: Hoffmann Eitle
(86) International application number: PCT/JP2017/011536
(87) International publication number: WO 2017/164255

(56) References cited:
- EP-A1- 2 717 082
- JP-A- 2003 241 041
- JP-A- 2003 241 042
- JP-A- 2010 033 010
- JP-A- 2010 033 010
- JP-A- 2012 208 312
- JP-A- 2012 208 312
- JP-A- 2012 252 196
- JP-A- 2012 252 196
- JP-A- 2013 003 516
- JP-U- S 599 052
- US-A- 5 530 782

## Description

### Technical Field

The present invention relates to a method and an apparatus for manufacturing an optical fiber ribbon.

This application claims priority on the basis of Japanese Patent Application No. 2016-058707, filed on March 23, 2016, and Japanese Patent Application No. 2016-070544, filed on March 31, 2016.

### Background Art

JP-A-2012-118358 discloses a method in which a discharge port for discharging a resin is provided on one partition piece for holding a space between optical fibers running in a state where the optical fibers are arranged in parallel, and the discharge amount and discharge timing of the resin are controlled to intermittently connect the optical fibers. JP-2012-252196 discloses a method in which a roller including a side surface with an adhesive resin intermittently applied is pressed to running optical fibers arranged in parallel and the adhesive resin is transferred to the optical fibers to intermittently bond the optical fibers.

### Citation List

### [Patent Literature]

Further example of the prior art can be found in document JP 2012 252196 A and JP 2010 033010 A.

### Summary of the Invention

A method for manufacturing an optical fiber ribbon according to an aspect of the present disclosure is a method for manufacturing an intermittent connection-type optical fiber ribbon including steps of: intermittently applying an adhesive resin between adjacent optical fibers of a plurality of optical fibers in the middle of a pass line in a longitudinal direction by arranging the plurality of optical fibers in parallel to allow the optical fibers to run on the pass line; and curing the adhesive resin,
in which the step of intermittently applying the adhesive resin is a step of, while rotating an adhesive resin conveying roller formed by alternately laminating a disk-like fiber roller installed in the pass line, a disk-like partition plate having a diameter, which is constant in a circumferential direction, larger than that of the fiber roller and including a gap portion for holding the adhesive resin in a part of the vicinity of a peripheral edge portion in a circumferential direction, immersing the adhesive resin conveying roller in the adhesive resin, which is not cured, to hold the adhesive resin in the gap portion, and then removing the adhesive resin attached to the peripheral edge portion of the fiber roller and brining the optical fibers into contact with the partition plate such that the partition plate is sandwiched between the optical fibers in running, so as to intermittently apply the adhesive resin held in the gap portion to the optical fibers in the longitudinal direction.

An apparatus for manufacturing optical fiber ribbon according to another aspect of the present disclosure is an apparatus for manufacturing an intermittent connection-type optical fiber ribbon including: a device for intermittently applying an adhesive resin between adjacent optical fibers of a plurality of optical fibers in the middle of a pass line in a longitudinal direction by arranging the plurality of optical fibers in parallel to allow the optical fibers to run on the pass line; and a device for curing the adhesive resin,
in which the device for intermittently applying the adhesive resin includes
an adhesive resin conveying roller comprising an alternately laminated disc-like fiber roller installed in the pass line, a disk-like partition plate having a diameter, which is constant in a circumferential direction, larger than that of the fiber roller and including a gap portion for holding the adhesive resin in a part of the vicinity of the peripheral edge portion in a circumferential direction, and
an adhesive resin tank which stores the adhesive resin and
a resin removing member configured to remove, when the adhesive resin is intermittently applied, the adhesive resin attached to the peripheral edge portion of the fiber roller.

### Brief Description of the Drawings

Fig. 1 is a schematic view showing the configuration of an apparatus for manufacturing an optical fiber ribbon according to a first embodiment and a second embodiment.
Fig. 2A is a plane view showing the configuration of an adhesive resin conveying roller and an adhesive resin tank in the first embodiment.
Fig. 2B is a cross-sectional view taken along line G-G in Fig. 2A.
Fig. 3 is a plane view showing the configuration of each partition plate in the first embodiment.
Fig. 4 shows cross-sectional views of each of regions A to F illustrating application of an adhesive resin by rotation of an adhesive resin conveying roller in the first embodiment.
Fig. 5 is a plane view showing a plurality of optical fibers to which an adhesive resin is intermittently applied between optical fibers at desired intervals in the first embodiment and the second embodiment.
Fig. 6 is a cross-sectional view of Fig. 5.
Fig. 7 is a plane view showing a modification example of the partition plate in the first embodiment.
Fig. 8A is a plane view showing the configuration of an adhesive resin conveying roller and an adhesive resin tank in the second embodiment.
Fig. 8B is a cross-sectional view of Fig. 8A.
Fig. 9 is a view showing the structure of each partition plate and the configuration of each partition plate in the second embodiment.
Fig. 10A is a view illustrating application of an adhesive resin by rotation of the adhesive resin conveying roller (regions A to C) in the second embodiment.
Fig. 10B is a view illustrating application of the adhesive resin by rotation of the adhesive resin conveying roller (regions D to F) in the second embodiment.

### Description of Embodiments

### [Problems to be Solved by the Present Disclosure]

However, in the method disclosed in JP-A-2012-118358, it is necessary to intermittently supply the resin to the discharge port provided on the partition piece. However, since the resin has viscosity, naturally, there is an upper limit in a period of time of repeating supply and stop. Therefore, since it is difficult to manufacture an intermittent connection-type optical fiber ribbon by allowing the optical fiber to run at a high speed and the manufacturing time becomes longer, the manufacturing cost increases. In addition, in the method disclosed in JP-A-2012-252196, there is a possibility that the adhesive may be attached to unnecessary portions and the desired intermittent connection shape may not be obtained.

An object of the present disclosure is to provide a method and an apparatus for manufacturing an optical fiber capable of manufacturing an intermittent connection-type optical fiber ribbon in which the optical fibers are intermittently connected in a desired shape by allowing the optical fiber to run at a high speed without increasing the manufacturing cost.

### [Effects of the Present Disclosure]

According to the present disclosure, it is possible to manufacture an intermittent connection-type optical fiber ribbon in a desired shape by allowing the optical fiber to run at a high speed without increasing the manufacturing cost.

### [General Description of the Present Disclosure]

A method for manufacturing an optical fiber ribbon according to a first aspect of the present invention is a method for manufacturing an intermittent connection-type optical fiber ribbon including steps of:
intermittently applying an adhesive resin between adjacent optical fibers of a plurality of optical fibers in the middle of a pass line in a longitudinal direction by arranging the plurality of optical fibers in parallel to allow the optical fibers to run on the pass line; and curing the adhesive resin,
in which the step of intermittently applying the adhesive resin is a step of, while rotating an adhesive resin conveying roller formed by alternately laminating a disk-like fiber roller installed in the pass line, a disk-like partition plate having a diameter, which is constant in a circumferential direction, larger than that of the fiber roller and including a gap portion for holding the adhesive resin in a part of the vicinity of a peripheral edge portion in a circumferential direction, immersing the adhesive resin conveying roller in the adhesive resin, which is not cured, to hold the adhesive resin in the gap portion, and then removing the adhesive resin attached to the peripheral edge portion of the fiber roller and brining the optical fibers into contact with the partition plate such that the partition plate is sandwiched between the optical fibers in running, so as to intermittently apply the adhesive resin held in the gap portion to the optical fibers in the longitudinal direction.

According to the method for manufacturing an optical fiber ribbon the optical fibers in running are brought into contact with the partition plate and the fiber roller, but in the portion of the partition plate provided with the gap portion, the adhesive resin held in the gap portion is applied to the side surface of the optical fiber adjacent to the partition plate. Therefore, the adhesive resin can be intermittently applied between the optical fibers by bringing the portion provided with the gap portion and the portion not provided with the gap into contact with the optical fibers in the partition plate.

In addition, since the position of the optical fibers is fixed by the adhesive resin conveying roller, a precise mechanism for improving the positioning accuracy is not required.

In addition, since the adhesive resin is simply supplied by immersing the adhesive resin conveying roller in the uncured adhesive resin while rotating the adhesive resin conveying roller, a mechanism for intermittently supplying the adhesive resin is not required and therefore, the adhesive resin can be intermittently applied while allowing the optical fibers to run at a high speed.

Thus, it is possible to manufacture an intermittent connection-type optical fiber ribbon in which optical fibers are intermittently connected in a desired shape by allowing the optical fibers to run at a high speed without increasing the manufacturing cost.

Advantageous modifications of the method are described below.

In the method for manufacturing an optical fiber ribbon the gap portion is a slit provided in the vicinity of the peripheral edge portion of the partition plate.

Since the adhesive resin can be held in the slit provided in the vicinity of the peripheral edge portion of the partition plate, the adhesive resin can be intermittently applied between the optical fibers by bringing the portion provided with the slit and the portion not provided with the slit into contact with the optical fibers in the partition plate.

In the method for manufacturing an optical fiber ribbon the gap portion includes at least one hole provided in the vicinity of the peripheral edge portion of the partition plate.

Since the adhesive resin can be held in the hole provided in the vicinity of the peripheral edge portion of the partition plate, the adhesive resin can be intermittently applied between the optical fibers by bringing the portion provided with the hole and the portion not provided with the hole into contact with the optical fibers in the partition plate. In addition, in a case where the gap portion is a hole, it is possible to prevent the adhesive resin from jumping out by the centrifugal force of the partition plate, and thus, the optical fibers can be allowed to run at a higher speed. Since the hole is relatively easily formed, the processing cost can be reduced.

In the method for manufacturing an optical fiber ribbon the adhesive resin conveying roller is formed by laminating a disk-like fiber roller provided with an opening portion in the vicinity of the center, and a disk-like partition plate having a diameter larger than that of the fiber roller and including at least one resin application hole provided in a part of the vicinity of the peripheral edge portion and an opening portion provided at the center, and further includes a disk-like guide roller provided so as to hold outer surfaces of the fiber rollers at both ends therebetween and including an opening portion in the vicinity of the center,
the opening portion of the fiber roller, the opening portion of the partition plate, and the opening portion of the guide roller communicate with each other to form a resin filling portion, and the resin filling portion and the resin application hole communicate with each other, and
the method further includes a filling step of filling the resin filling portion with the adhesive resin from the opening portion on a side surface of the guide roller by immersing the adhesive resin conveying roller in the uncured adhesive resin while rotating the adhesive resin conveying roller.

According to the method for manufacturing an optical fiber ribbon the optical fibers in running are brought into contact with the partition plate and the fiber roller, and in the portion of the partition plate in which the resin application hole is provided, the adhesive resin is applied to the side surface of the optical fiber adjacent to the partition plate. Therefore, the adhesive resin can be intermittently applied between the optical fibers by bringing the portion provided with the hole and the portion not provided with the hole into contact with the optical fibers in the partition plate.

When the adhesive resin conveying roller is immersed in the adhesive resin tank while rotating the adhesive resin conveying roller, the resin filling portion communicating with the opening portion of the guide roller of the side surface of the adhesive resin conveying roller is filled with the adhesive resin, and thus the resin can be held even when the adhesive resin conveying roller rotates. Since the resin application hole communicates with the resin filling portion, the adhesive resin can be reliably supplied to the resin application hole even when the adhesive resin conveying roller is rotated at a high speed. Accordingly, an intermittent connection-type optical fiber ribbon in which the optical fibers are intermittently connected in a desired shape can be manufactured by allowing the optical fibers to run at a high speed, the manufacturing time can be reduced, and the manufacturing cost can be reduced.

In addition, since the position of the optical fibers is fixed by the adhesive resin conveying roller, a precise mechanism for improving the positioning accuracy is not required. Further, since the adhesive resin is simply supplied by immersing the adhesive resin conveying roller in the uncured adhesive resin while rotating the adhesive resin conveying roller, a mechanism for intermittently supplying the adhesive resin is not required and therefore, the adhesive resin can be intermittently applied while allowing the optical fibers to run at a high speed.

In the method for manufacturing an optical fiber ribbon the adhesive resin conveying roller is driven to rotate by power.

Since the adhesive resin conveying roller is driven to rotate by power, it is possible to arbitrarily change the intermittent connection pitch of the optical fiber ribbon without changing the diameter of the roller.

In the method for manufacturing an optical fiber ribbon a sensor for detecting a running speed of the optical fiber is arranged on an upstream side of the pass line from the adhesive resin conveying roller, and
a rotational speed of the adhesive resin conveying roller is controlled using information on the running speed detected by the sensor.

The running speed of the optical fiber ribbon is detected and based on the information on the detected running speed, the rotational speed of the adhesive resin conveying roller is controlled. Thus, even when the running speed of the optical fiber is changed, a desired intermittent connection pitch of the optical fiber ribbon can be stably realized.

In the method for manufacturing an optical fiber ribbon the adhesive resin conveying roller is not driven by power but rotated by friction with the plurality of optical fibers.

Since the adhesive resin conveying roller is not driven by power but rotated by friction with the plurality of optical fibers, slippage between the roller and the optical fibers is minimized and damage to the surface of the optical fibers can be prevented. Even when the running speed of the optical fibers is changed, the rotational speed of the adhesive resin conveying roller is also changed according to the changed running speed and thus the intermittent connection pitch is stabilized.

An apparatus for manufacturing an optical fiber ribbon according to another aspect of the present invention is an apparatus for manufacturing an intermittent connection-type optical fiber ribbon including:
a device for intermittently applying an adhesive resin between adjacent optical fibers of a plurality of optical fibers in the middle of a pass line in a longitudinal direction by arranging the plurality of optical fibers in parallel to allow the optical fibers to run on the pass line; and
a device for curing the adhesive resin,
in which the device for intermittently applying the adhesive resin includes
an adhesive resin conveying roller formed by alternately laminating a disk-like fiber roller installed in the pass line, a disk-like partition plate having a diameter, which is constant in a circumferential direction, larger than that of the fiber roller and including a gap portion for holding the adhesive resin in a part of the vicinity of the peripheral edge portion in a circumferential direction, and
an adhesive resin tank which stores the adhesive resin, and
a resin removing member adapted to remove, when the adhesive resin is intermittently applied, the adhesive resin attached to the peripheral edge portion of the fiber roller is configured to be removed.

According to the apparatus for manufacturing an optical fiber ribbon the optical fibers in running are brought into contact with the partition plate and the fiber roller, but in the portion of the partition plate provided with the gap portion, the adhesive resin held in the gap portion is applied to the side surface of the optical fiber adjacent to the partition plate. Therefore, the adhesive resin can be intermittently applied between the optical fibers by bringing the portion provided with the gap portion and the portion not provided with the gap into contact with the optical fibers in the partition plate.

In addition, since the position of the optical fibers is fixed by the adhesive resin conveying roller, a precise mechanism for improving the positioning accuracy is not required.

In addition, since the adhesive resin is simply supplied by immersing the adhesive resin conveying roller in the uncured adhesive resin while rotating the adhesive resin conveying roller, a mechanism for intermittently supplying the adhesive resin is not required and therefore, the adhesive resin can be intermittently applied while allowing the optical fibers to run at a high speed.

Thus, it is possible to manufacture an intermittent connection-type optical fiber ribbon in which optical fibers are intermittently connected in a desired shape by allowing the optical fibers to run at a high speed without increasing the manufacturing cost.

Advantageous modifications of the apparatus are described below.

In the apparatus for manufacturing an optical fiber ribbon the gap portion is a slit provided in the vicinity of the peripheral edge portion of the partition plate.

Since the adhesive resin can be held in the slit provided in the vicinity of the peripheral edge portion of the partition plate, the adhesive resin can be intermittently applied between the optical fibers by bringing the portion provided with the slit and the portion not provided with the slit into contact with the optical fibers in the partition plate.

In the apparatus for manufacturing an optical fiber ribbon the gap portion includes at least one hole provided in the vicinity of the peripheral edge portion of the partition plate.

Since the adhesive resin can be held in the hole provided in the vicinity of the peripheral edge portion of the partition plate, the adhesive resin can be intermittently applied between the optical fibers by bringing the portion provided with the hole and the portion not provided with the hole into contact with the optical fibers in the partition plate. In addition, in a case where the gap portion is a hole, it is possible to prevent the adhesive resin from jumping out by the centrifugal force of the partition plate, and thus, the optical fibers can be allowed to run at a higher speed. Since the hole is relatively easily formed, the processing cost can be reduced.

In the apparatus for manufacturing an optical fiber ribbon, the adhesive resin conveying roller is formed by alternately laminating
a disk-like fiber roller provided with an opening portion in the vicinity of the center, and
a disk-like partition plate having a diameter larger than that of the fiber roller and including at least one resin application hole provided in a part of the vicinity of the peripheral edge portion and an opening portion provided at the center, and further includes a disk-like guide roller provided so as to hold outer surfaces of the fiber rollers at both ends therebetween and including an opening portion in the vicinity of the center, and
the opening portion of the fiber roller, the opening portion of the partition plate, and the opening portion of the guide roller communicate with each other to form a resin filling portion and the resin filling portion and the resin application hole communicate with each other.

According to the apparatus for manufacturing an optical fiber ribbon the optical fibers in running are brought into contact with the partition plate and the fiber roller, and in the portion of the partition plate in which the resin application hole is provided, the adhesive resin is applied to the side surface of the optical fiber adjacent to the partition plate. Therefore, the adhesive resin can be intermittently applied between the optical fibers by bringing the portion provided with the hole and the portion not provided with the hole into contact with the optical fibers in the partition plate.

When the adhesive resin conveying roller is immersed in the adhesive resin tank while rotating the adhesive resin conveying roller, the resin filling portion communicating with the opening portion of the guide roller of the side surface of the adhesive resin conveying roller is filled with the adhesive resin, and thus the resin can be held even when the adhesive resin conveying roller rotates. Since the resin application hole communicates with the resin filling portion, the adhesive resin can be reliably supplied to the resin application hole even when the adhesive resin conveying roller is rotated at a high speed. Accordingly, an intermittent connection-type optical fiber ribbon in which the optical fibers are intermittently connected in a desired shape can be manufactured by allowing the optical fibers to run at a high speed, and the manufacturing cost can be reduced.

In addition, since the position of the optical fibers is fixed by the adhesive resin conveying roller, a precise mechanism for improving the positioning accuracy is not required. Further, since the adhesive resin is simply supplied by immersing the adhesive resin conveying roller in the uncured adhesive resin while rotating the adhesive resin conveying roller, a mechanism for intermittently supplying the adhesive resin is not required.

The apparatus for manufacturing an optical fiber ribbon further includes:
a driving unit which rotates the adhesive resin conveying roller.

Since the adhesive resin conveying roller is driven to rotate by power, it is possible to arbitrarily change the intermittent connection pitch of the optical fiber ribbon without changing the diameter of the roller.

The apparatus for manufacturing an optical fiber ribbon further includes:
a sensor which is arranged on an upstream side of the pass line from the adhesive resin conveying roller to detect a running speed of the optical fiber, and
a control unit which controls the driving unit using information on the running speed detected by the sensor.

The running speed of the optical fiber can be detected by the sensor and based on the information on the detected running speed, the rotational speed of the adhesive resin conveying roller can be controlled. Thus, even when the running speed of the optical fiber is changed, a desired intermittent connection pitch of the optical fiber ribbon can be stably realized.

In the apparatus for manufacturing an optical fiber ribbon
the adhesive resin conveying roller is installed so as to be rotated by friction with the optical fibers.

Since the adhesive resin conveying roller is installed so as to be rotated by friction with the optical fibers, slippage between the roller and the optical fibers is minimized and damage to the surface of the optical fibers can be prevented. Even when the running speed of the optical fibers is changed, the rotational speed of the adhesive resin conveying roller is also changed according to the changed running speed and thus the intermittent connection pitch is stabilized. In addition, since a device for driving the adhesive resin conveying roller is not required, a cheaper apparatus configuration can be achieved.

### [Details of Embodiments of the Present Invention]

Specific examples of the method and apparatus for manufacturing an optical fiber ribbon according to embodiments of the present invention will be described with reference to the drawings.

The present invention is not limited these examples and the scope of the present invention is defined by the scope of the claims.

### [First Embodiment]

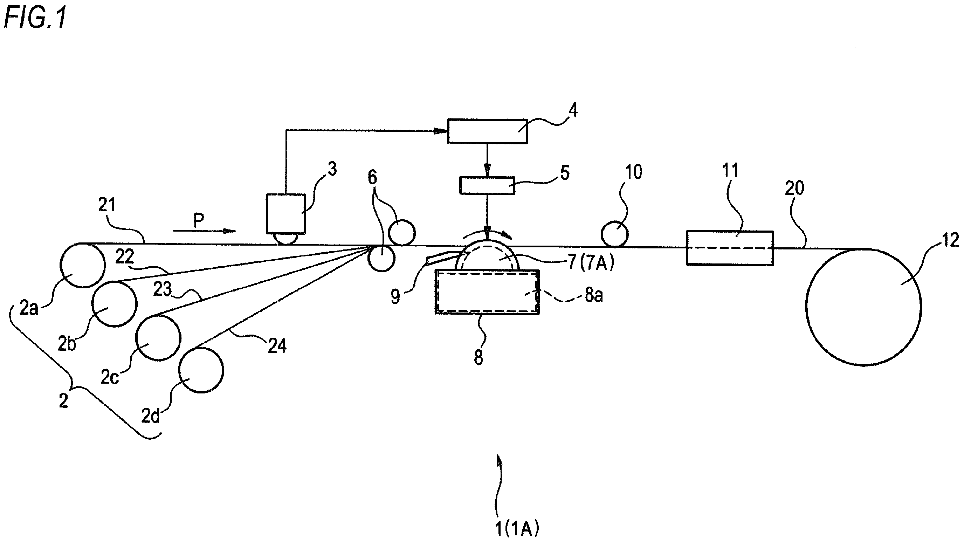

Fig. 1 is a schematic view showing the configuration of an apparatus 1 for manufacturing an optical fiber ribbon according to a first embodiment. The apparatus 1 for manufacturing an optical fiber ribbon includes a supply bobbin group 2, a sensor 3, a control unit 4, a driving unit 5, an upstream-side arrangement correction roller 6, an adhesive resin conveying roller 7, an adhesive resin tank 8, a resin removing member 9, a downstream-side arrangement correction roller 10, an adhesive resin curing device 11, and a take-up bobbin 12.

The supply bobbin group 2 is constituted of a plurality of supply bobbins 2a to 2d, and optical fibers 21 to 24 are respectively wound around the supply bobbins. A plurality of the optical fibers 21 to 24 are respectively supplied from the supply bobbins 2a to 2d so as to have the same running speed and the running speed is detected by, for example, the sensor 3. The information on the running speed of these optical fibers is transmitted to the control unit 4.

The upstream-side arrangement correction roller 6 is provided for arranging the plurality of optical fibers 21 to 24 in parallel. By allowing the optical fibers to pass through the upstream-side arrangement correction roller 6, the plurality of optical fibers 21 to 24 running on a pass line P are corrected to be arranged in parallel.

The control unit 4 controls the driving unit 5 based on, for example, the information on the running speed of the optical fibers 21 to 24. The driving unit 5 derives the adhesive resin conveying roller 7. The adhesive resin conveying roller 7 is a roller for applying an uncured adhesive resin 8a stored in the adhesive resin tank 8 between the optical fibers 21 to 24 at desired intervals. The details of the method for applying an adhesive resin by the adhesive resin conveying roller 7 will be described later.

The downstream-side arrangement correction roller 10 is provided for correcting the optical fibers 21 to 24 between which the adhesive resin is applied at desired intervals by the adhesive resin conveying roller 7 to be arranged in parallel until the optical fibers are sent to the adhesive resin curing device 11.

The adhesive resin curing device 11 is a device for curing the adhesive resin 8a (for example, an ultraviolet irradiation device in a case where the adhesive resin 8a is an ultraviolet curable resin, and the like).

The take-up bobbin 12 is a roller for taking up a manufactured intermittent connection-type optical fiber ribbon 20.

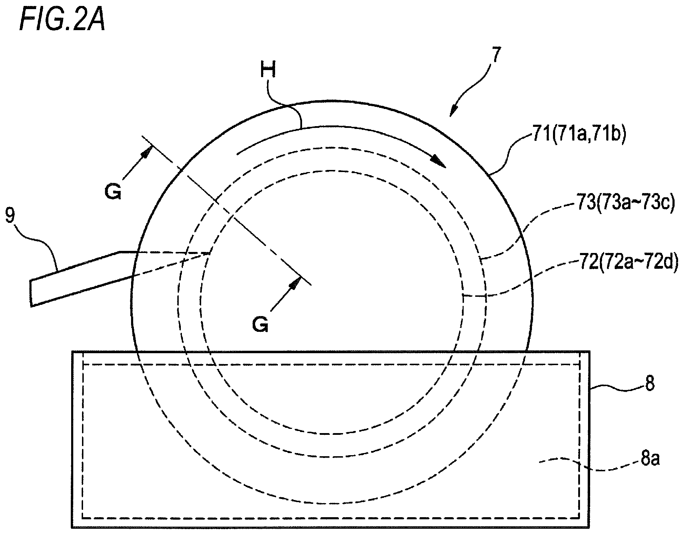

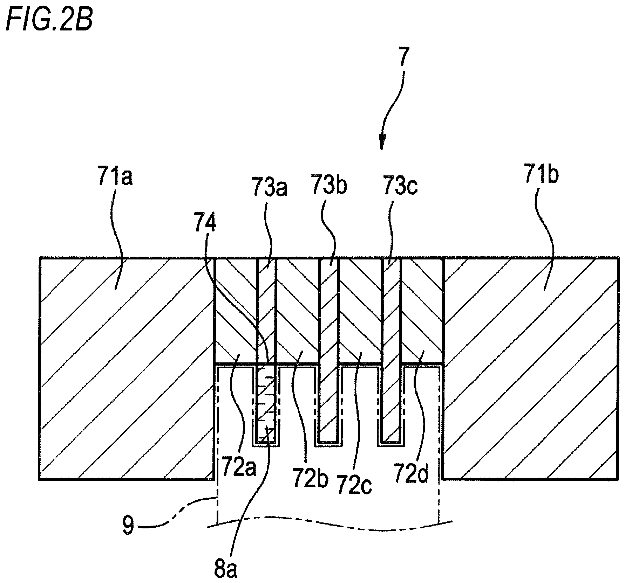

Next, in the first embodiment, the method for applying the adhesive resin 8a by the adhesive resin conveying roller 7 will be described in detail with reference to the drawings. Figs. 2A and 2B are views showing the configurations of the adhesive resin conveying roller 7 and the adhesive resin tank 8.

As shown in Figs. 1, 2A and 2B, the adhesive resin conveying roller 7 is installed to be partially immersed in the adhesive resin 8a (for example, a liquid ultraviolet curable resin) stored in the adhesive resin tank 8.

As shown in Figs. 2A and 2B which is a cross-sectional view taken long line G-G of Fig. 2A, the adhesive resin conveying roller 7 is formed by alternately laminating a disk-like fiber roller 72 (72a to 72d), a disk-like partition plate 73 (73a to 73c) having a diameter larger than that of the fiber roller 72 and including a gap portion 74 for holding the adhesive resin 8a in a part of the vicinity of the peripheral edge portion. Further, the outer surfaces of the fiber rollers 72a and 72d at both ends are respectively held between disk-like guide rollers 71a and 71b.

The adhesive resin conveying roller 7 is driven by, for example, the driving unit 5 so as to rotate in a direction indicated by the arrow H in Fig. 2A. That is, the adhesive resin conveying roller 7 rotates such that the adhesive resin conveying roller is partially immersed in the adhesive resin 8a of the adhesive resin tank 8 from the right side in Fig. 2A and is taken out from the adhesive resin tank 8 from the left side.

For example, the resin removing member 9 (for example, a spatula member) which removes the adhesive resin 8a by being brought into press-contact with the peripheral edge portions of the fiber rollers 72 (72a to 72d) is provided on the upper left side of the adhesive resin tank 8 when the adhesive resin conveying roller 7 is taken out from the adhesive resin tank 8.

Next, the configuration of the partition plate 73 (73a to 73c) will be described.

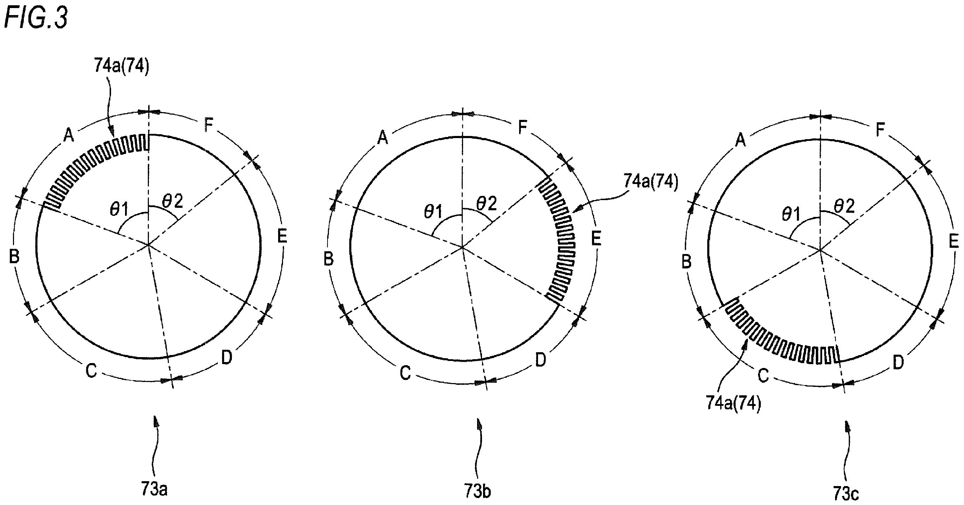

Fig. 3 is a view showing the configuration of each partition plate. For example, as shown in Fig. 3, the peripheral edge portion of the partition plate 73 (73a to 73c) is divided into a plurality of regions (for example, regions A to F) in the circumferential direction, and a slit 74a opened in a part of these regions (for example, a slit having a width of about 0.1 mm) is provided as a gap portion 74. For example, as an example of the size of the partition plate 73 (73a to 73c), the diameter is 32.0 mm, the thickness is 0.2 mm, and the depth of the slit 74a is 0.4 mm. In this case, the circumference of the partition plate is about 100 mm.

In the example of Fig. 3, the gap portion 74 is provided in the region A of the partition plate 73a between the optical fibers 21 and 22.

The intermittent connection pitch of an optical fiber ribbon to be manufactured (the length of a connection portion and a sum of the length of non-connection portions between two specific adjacent optical fibers) is equal to the circumferential length of the partition plate.

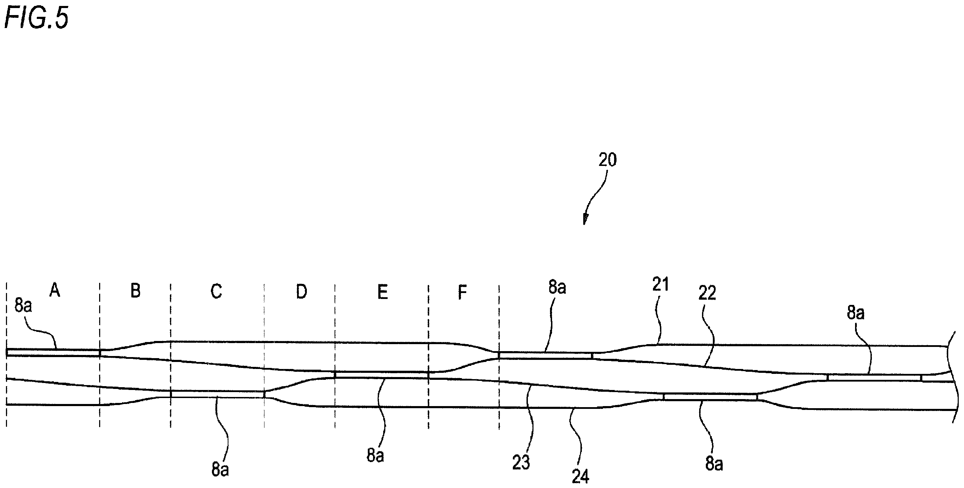

Further, the length of the connection portion and the length of the non-connection portion between two specific adjacent optical fibers (for example, in a case of the optical fibers 21 and 22, the length of the part A and a sum of the length of each of the parts B, C, D, E, and F in Fig. 5) can be set by the length of a region provided with the gap portion 74 (for example, an angle θ1 = 72°) and regions not provided with the gap portion (360° - θ1 = 288°) in the partition plate 73a of Fig. 3 in the circumferential direction. For example, as described above, in a case where the circumference of the partition plate is set to about 100 mm and the angle is set to θ1 = 72°, the length of the connection portion (the length of the region A) is 20 mm and the length of the non-connection portions (the regions B, C, D, E, and F) is 80 mm.

The partition plate 73b between the optical fibers 22 and 23 and the partition plate 73c between the optical fibers 23 and 24 also adopt the same structure as the 73a, and thus the same connection portion between the optical fibers 21 and 22 and the non-connection portions can be provided. In this manner, it is possible to manufacture an intermittent connection-type optical fiber ribbon as shown in Fig. 5 by setting an appropriate difference in angle between the partition plates 73a, 73b, and 73c.

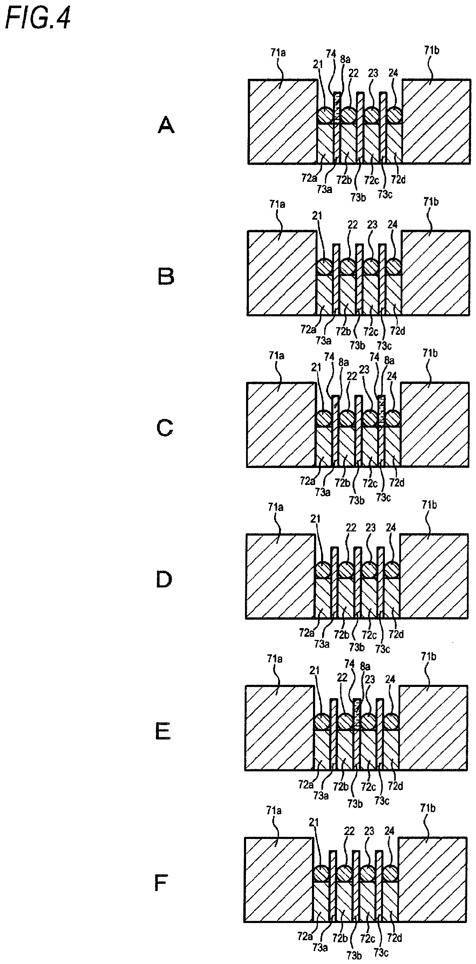

Next, a method for manufacturing an intermittent connection-type optical fiber ribbon 20 formed by intermittently connecting optical fibers in a desired shape using the apparatus 1 for manufacturing an optical fiber ribbon according to the first embodiment will be described. Fig. 4 shows cross-sectional views of regions A to F illustrating application of the adhesive resin 8a by the rotation of the adhesive resin conveying roller 7.

As shown in Fig. 1, the plurality of optical fibers 21 to 24 are arranged in parallel by the upstream-side arrangement correction roller 6 and are sent to the adhesive resin conveying roller 7. As shown in Fig. 4, in the adhesive resin conveying roller 7, the regions A to F of the partition plate 73 (73a to 73c) are sequentially sandwiched between the respective fibers of the optical fibers 21 to 24 in accordance with the rotation of the adhesive resin conveying roller 7.

In the region A, the gap portion 74 is provided only in the partition plate 73a sandwiched between the optical fibers 21 and 22. When the adhesive resin conveying roller 7 is taken out from the adhesive resin tank 8, the resin removing member 9 is brought into press-contact with the peripheral edge portion of each fiber roller 72 (72a to 72d), and the adhesive resin 8a is removed. However, since the adhesive resin 8a is held in the gap portion 74 of the partition plate 73a, in the region A, the adhesive resin 8a penetrates between the optical fibers 21 and 22 and is applied between the optical fibers 21 and 22.

In the region B, since there is no gap portion 74 in the partition plates 73a to 73c, the adhesive resin 8a is not applied to each optical fiber.

In the region C, the adhesive resin 8a penetrates between the optical fibers 23 and 24 and is applied between the optical fibers 23 and 24.

In the region D, since there is no gap portion 74 in the partition plates 73a to 73c, the adhesive resin 8a is not applied to each optical fiber.

In the region E, the adhesive resin 8a penetrates between the optical fibers 22 and 23 and is applied between the optical fibers 22 and 23.

In the region F, since there is no gap portion 74 in the partition plates 73a to 73c, the adhesive resin 8a is not applied to each optical fiber.

When the adhesive resin conveying roller 7 rotates once, the adhesive resin 8a is applied by the regions A to F again and the operation is repeated thereafter.

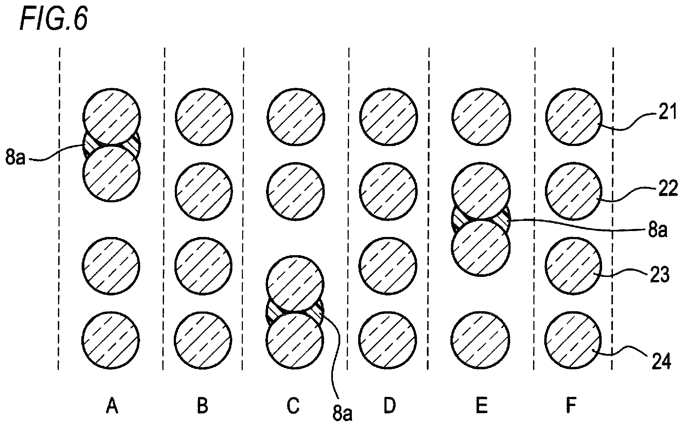

The optical fibers 21 to 24 to which the adhesive resin 8a is applied by the adhesive resin conveying roller 7 are in a state where the adhesive resin is intermittently applied between the fibers as shown in Figs. 5 and 6 at a desired interval, and are sent to the downstream-side arrangement correction roller 10.

By passing through the downstream-side arrangement correction roller 10, the optical fibers 21 to 24 are corrected to be arranged in parallel and are sent to the adhesive resin curing device 11.

In the optical fibers 21 to 24 which have been corrected to be arranged in parallel, the adhesive resin 8a is cured by the adhesive resin curing device 11 (for example, in a case where the adhesive resin 8a is an ultraviolet curable resin, an optical fibers 21 to 24 are irradiated with ultraviolet rays from the adhesive resin curing device 11 to cure the adhesive resin 8a).

The optical fibers 21 to 24 in which the adhesive resin 8a has been cured by the adhesive resin curing device 11 are taken up by the take-up bobbin 12 as an intermittent connection-type optical fiber ribbon 20 in which the optical fibers are intermittently connected in a desired shape as shown in Fig. 5.

As described above, according to the apparatus 1 for manufacturing an optical fiber ribbon and the method for manufacturing an optical fiber ribbon according to the first embodiment described in detail, while the running optical fibers 21 to 24 are brought into contact with the partition plate 73 and the fiber roller 72, the adhesive resin 8a is removed from the peripheral edge portion of the fiber roller 72 by the resin removing member 9, and thus, the adhesive resin 8a is not applied to the contact surfaces of the optical fibers 21 to 24 with respect to the fiber roller 72.

However, the adhesive resin 8a held in the gap portion 74 is applied to the side surfaces of the optical fibers 21 to 24 adjacent to the partition plate 73 in the portion of the partition plate 73 in which the gap portion 74 is provided. Therefore, the adhesive resin 8a can be intermittently applied between the optical fibers by bringing the portion provided with the gap portion 74 and the portion not provided with the gap portion in the partition plate 73 into contact with the optical fibers 21 to 24.

In addition, since the positions of the optical fibers 21 to 24 are fixed by the adhesive resin conveying roller 7, a precise mechanism for improving the positioning accuracy is not required. Since the adhesive resin 8a is supplied simply by immersing the adhesive resin conveying roller 7 in the uncured adhesive resin 8a stored in the adhesive resin tank 8 while rotating the adhesive resin conveying roller 7, a mechanism for intermittently supplying the adhesive resin 8a is not required and thus the adhesive resin 8a can be applied intermittently while allowing the optical fibers 21 to 24 to run at a high speed.

Thus, it is possible to manufacture the intermittent connection-type optical fiber ribbon 20 in which the optical fibers are intermittently connected in a desired shape by allowing the optical fibers 21 to 24 to run at a high speed without increasing the manufacturing cost.

Since the adhesive resin 8a can be held in the open slit 74a provided in the vicinity of the peripheral edge portion of the partition plate 73 as the gap portion 74, the portion provided with the slit 74a and the portion not provided with the slit in the partition plate 73 are brought into contact with the optical fibers 21 to 24, and thus the adhesive resin 8a can be intermittently applied between the optical fibers.

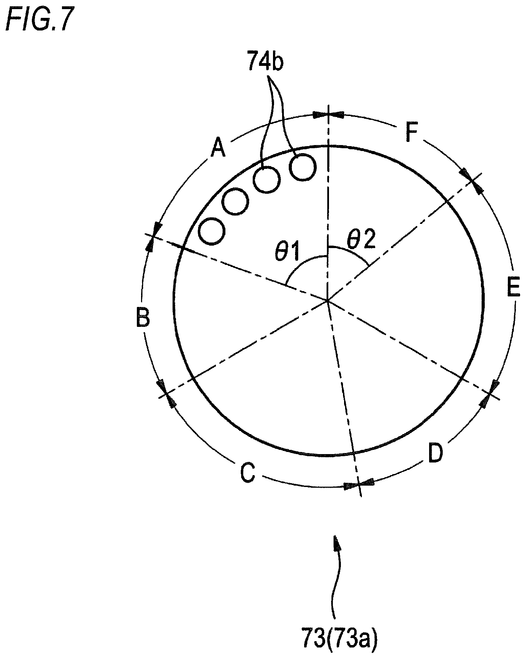

In the first embodiment described above, the gap portion 74 is provided as an open slit. However, as shown in the modified example of Fig. 7, the gap portion 74 may be at least one hole 74b (for example, a substantially circular hole having a diameter of about 0.5 mm) provided in the vicinity of the peripheral edge portion of the partition plate 73. In Fig. 7, only the partition plate 73a is shown, but the gap portions 74 of other partition plates 73b and 73c are also the same. Further, in Fig. 7, a hole 74b has a substantially circular shape, but another shape may be used.

According to the modification of the first embodiment, since the adhesive resin 8a can be held in the hole 74b provided in the vicinity of the peripheral edge portion of the partition plate 73, it is possible to intermittently apply the adhesive resin between the optical fibers by bringing a portion provided with the hole 74b and a portion not provided with the hole 74b into contact with the optical fibers 21 to 24 by the partition plate 73. In addition, even when the centrifugal force due to the rotation of the adhesive resin conveying roller 7 acts on the partition plate 73, the adhesive resin 8a remains in the hole 74b. Therefore, it is possible to prevent the adhesive resin 8a from jumping out to the outside, so that the optical fibers 21 to 24 can be allowed to run at a higher speed. Also, since the hole 74b is relatively easily formed, the processing cost can be reduced.

In addition, since the driving unit 5 for rotating the adhesive resin conveying roller 7 is provided and the adhesive resin conveying roller 7 is driven by power, it is possible to arbitrarily change the intermittent connection pitch of the optical fiber ribbon 20 without changing the diameter of the roller.

Further, the sensor 3 for detecting the running speed of the optical fibers 21 to 24 is disposed on the upstream side of the pass line P from the adhesive resin conveying roller 7 to detect the running speed. The rotational speed of the adhesive resin conveying roller 7 may be controlled using information on the running speed detected by the sensor 3. In this case, even when the running speed of the optical fibers 21 to 24 is changed, a desired intermittent connection pitch of the optical fiber ribbon 20 can be stably realized.

The adhesive resin conveying roller 7 may be installed so as to be rotated by friction with the plurality of optical fibers 21 to 24 without being driven by the driving unit 5.

In this case, since the adhesive resin conveying roller 7 is not driven by power but rotated by friction with the plurality of optical fibers 21 to 24, slippage between the roller and the optical fibers is minimized and damage to the surface of the optical fibers can be prevented. Even when the running speed of the optical fibers 21 to 24 is changed, the rotational speed of the adhesive resin conveying roller 7 is also changed according to the changed running speed and thus the intermittent connection pitch is stabilized.

In the first embodiment, the plurality of optical fibers are four optical fibers. However, as long as a plurality of optical fibers are provided, the number of optical fibers may be other than four. In this case, the adhesive resin conveying roller 7 may be configured to match the number of optical fibers (the number of fiber rollers 72 and partition plates 73 is matched). In addition, although the partition plate 73 is divided into the regions A to F, numbers of regions and dividing methods other than the above number and dividing method may be adopted.

### [Second Embodiment]

The schematic configuration of an apparatus 1A for manufacturing an optical fiber ribbon according to a second embodiment is the same as that of the manufacturing apparatus 1 according to the first embodiment shown in Fig. 1. Therefore, the description of the schematic configuration of the manufacturing apparatus will be omitted. The structure of an optical fiber manufactured in the second embodiment is the same as that shown in Figs. 5 and 6. Elements similar to those in the first embodiment are denoted by the same reference numerals, and overlapping descriptions are appropriately omitted.

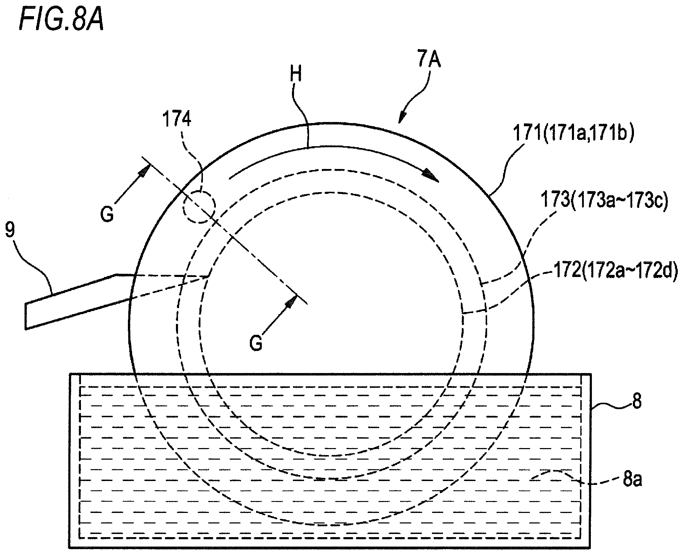

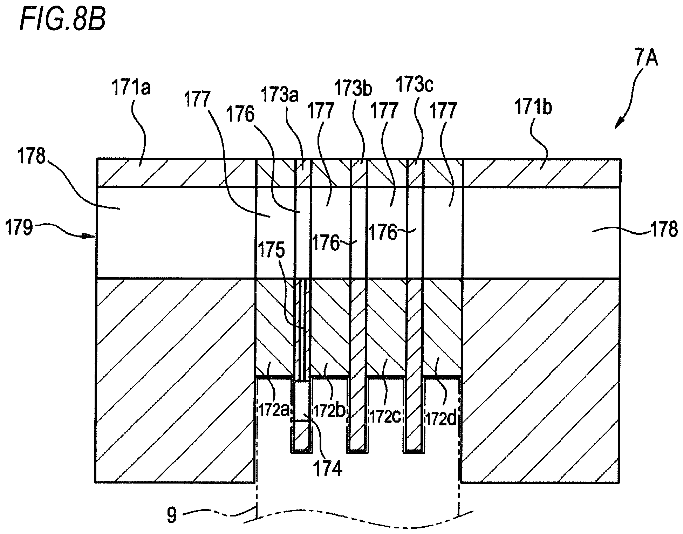

The structure of an adhesive resin conveying roller 7A and the method for applying the adhesive resin in the second embodiment will be described in detail with reference to the drawings. Figs. 8A and 8B are configuration views of the adhesive resin conveying roller 7A and the adhesive resin tank 8.

As shown in Figs. 1, 8A and 8B, the adhesive resin conveying roller 7A of the second embodiment is installed so as to be partially immersed in an uncured adhesive resin 8a (for example, liquid ultraviolet curable resin) stored in the adhesive resin tank 8.

As shown in Figs. 8A and 8B which is a cross-sectional view taken long line G-G of Fig. 8A, the adhesive resin conveying roller 7A is formed by alternately laminating a disk-like fiber roller 172 (172a to 172d), and a disk-like partition plate 173 (173a to 173c). Further, the outer surfaces of the fiber rollers 172a and 172d at both ends are held between disk-like guide rollers 171a and 171b respectively.

The fiber roller 172 (172a to 172d) is provided with an opening portion 177 in the vicinity of the center.

The partition plate 173 (173a to 173c) has a diameter larger than that of the fiber roller 172 and includes at least one resin application hole 174 in a part in the vicinity of the peripheral edge portion, and opening portion 176 communicating with the resin application hole 174 by a flow path 175 and also communicating with the opening portion 177 of the fiber roller 172 (172a to 172d).

The guide rollers 171a and 171b are provided with opening portions 178 respectively communicating with the opening portions 177 of the fiber rollers 172a and 172d. The opening portions 178 are opened at the side surfaces of the guide rollers 171a and 171b.

The opening portions 177 of the fiber rollers 172a to 172d, the opening portions 176 of the partition plates 173 (173a to 173c), and the opening portions 178 of the guide rollers 171a and 171b communicate with each other and these opening portions function as resin filling portions 179 as a whole.

The adhesive resin conveying roller 7A is driven by the driving unit 5 so as to rotate in a direction indicated by the arrow H in Fig. 8A. That is, a part of the adhesive resin conveying roller 7A rotates such that a part thereof is immersed in the adhesive resin 8a of the adhesive resin tank 8 from the right side of Fig. 8A and is taken out from the adhesive resin tank 8 from the left side.

In addition, the resin removing member 9 (for example, a spatula member) which removes the adhesive resin 8a by being brought into press-contact with the peripheral edge portions of the fiber rollers 172 (172a to 172d) is provided on the upper left side of the adhesive resin tank 8 when the adhesive resin conveying roller 7 is taken out from the adhesive resin tank 8.

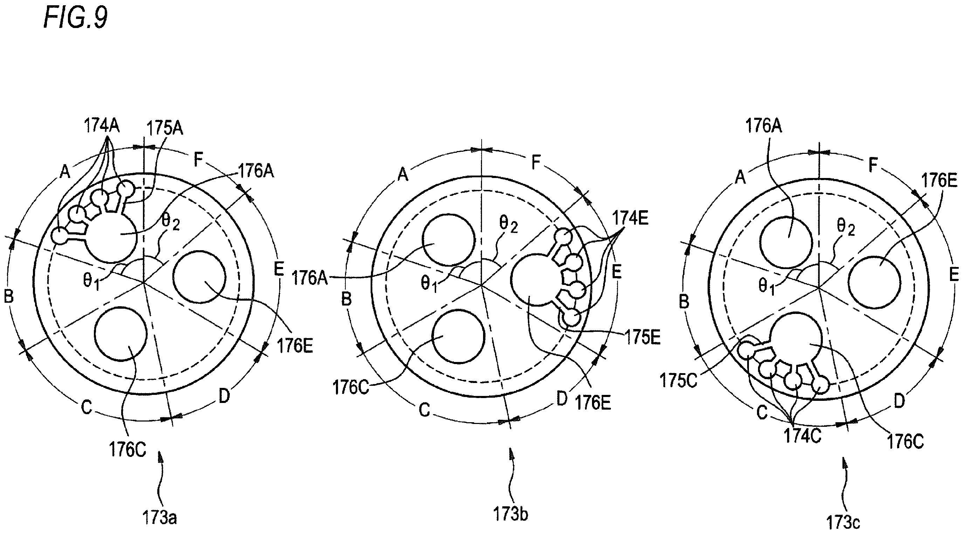

Further, the structure of the partition plate 173 and the configuration of each of the partition plates 173a to 173c will be described. Fig. 9 is a view showing the structure of the partition plate and the configuration of each partition plate.

For example, as shown in Fig. 9, the peripheral edge portion of the partition plate 173 (173a to 173c) is divided into a plurality of regions (for example, regions A to F) in the circumferential direction, and at least one resin application hole 174 (174A, 174E, and 174C) (in the example in Fig. 9, four resin application holes) is provided in a part of these regions. The resin application holes 174 (174A, 174E, and 174C) are connected to the opening portions 176 (176A, 176E, and 176C) by the flow paths 175 (175A, 175E, and 175C), respectively.

For example, as an example of the size of the partition plate 173 (173a to 173c), the diameter is 32.0 mm, the thickness is 0.2 mm, and the diameter of the resin application hole 174 (174A, 174E, and 174C) is 0.5 mm. In this case, the circumference of the partition plate is about 100 mm.

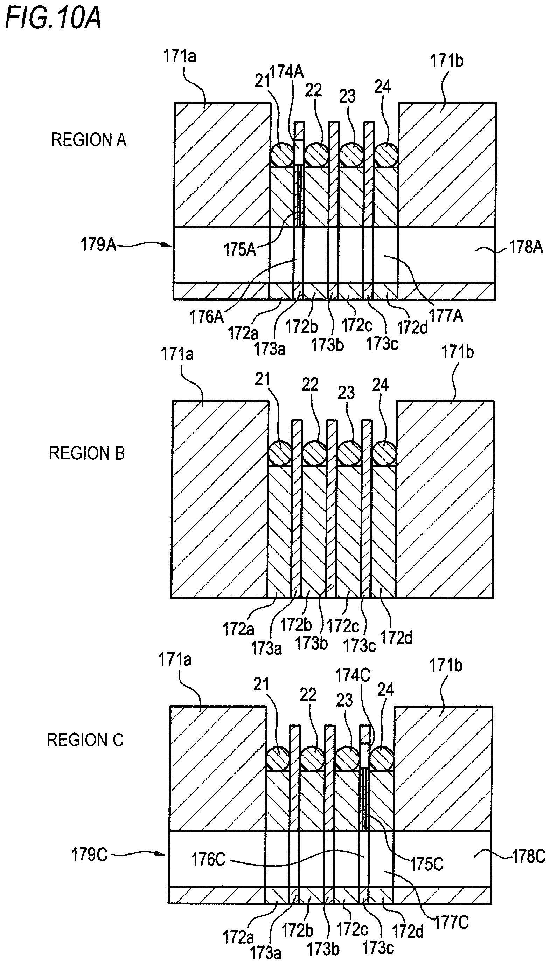

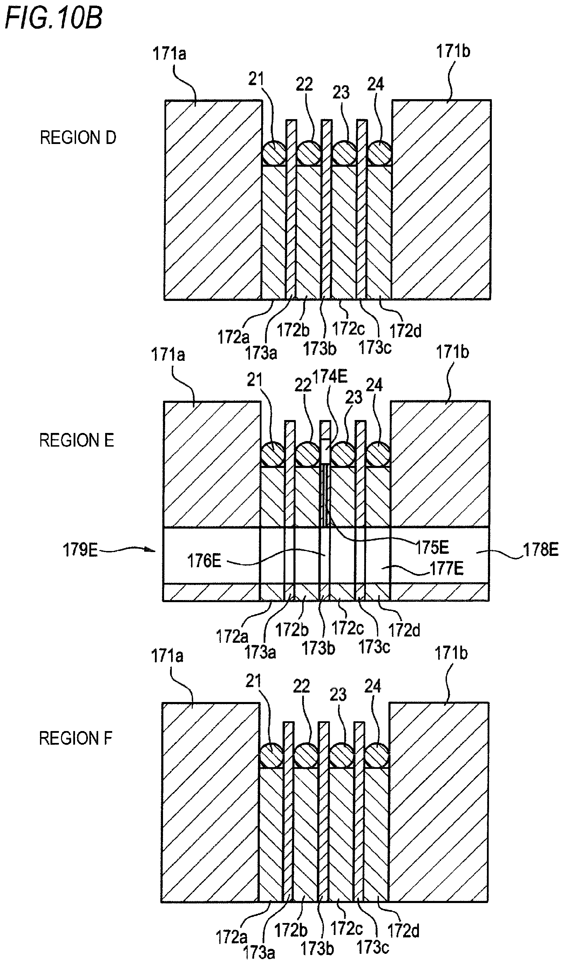

In the example in Fig. 9, the resin application holes 174A, 174E, and 174C, the opening portions 176A, 176E, and 176C are respectively provided in the region A of the partition plate 173a, the region E of the partition plate 173b, and the region C of the partition plate 173c. Then, as shown in Figs. 10A and 10B described later, the opening portions 176A, 176E, and 176C communicate with the opening portions 177A, 177E, and 177C, of the fiber rollers 172a to 172d and the opening portions 178A, 178E, and 178C of the guide rollers 171a and 171b, respectively.

The intermittent connection pitch of the optical fiber ribbon to be manufactured (the length of a portion connecting optical fibers and a sum of the length of portions not connecting optical fibers between two specific adjacent optical fibers) is equal to the circumferential length of the partition plate.

Further, the length of the connection portion and the length of the non-connection portion between two specific adjacent optical fibers (for example, in a case of the optical fibers 21 and 22, the length of the part A and a sum of the length of each of the parts B, C, D, E, and F in Fig. 5) can be set by the length of a region provided with the gap portion 174 (for example, an angle θ1 = 72°) and regions not provided with the gap portion (360° - θ1 = 288°) in the partition plate 173a of Fig. 9 in the circumferential direction. For example, as described above, in a case where the circumference of the partition plate is set to about 100 mm and the angle is set to θ1 = 72°, the length of the connection portion (the length of the region A) is 20 mm and the length of the non-connection portions (the regions B, C, D, E, and F) is 80 mm.

Next, a method for manufacturing an intermittent connection-type optical fiber ribbon 20 formed by intermittently connecting optical fibers in a desired shape using the apparatus 1A for manufacturing an optical fiber ribbon according to the second embodiment will be described. Figs. 10A and 10B show views illustrating application of the adhesive resin 8a by the rotation of the adhesive resin conveying roller 7A.

As shown in Fig. 1, the plurality of optical fibers 21 to 24 are arranged in parallel by the upstream-side arrangement correction roller 6 and are sent to the adhesive resin conveying roller 7A. As shown in Figs. 10A and 10B, in the adhesive resin conveying roller 7A, the regions A to F of the partition plate 173 (173a to 173c) are sequentially sandwiched between the respective fibers of the optical fibers 21 to 24 in accordance with the rotation of the adhesive resin conveying roller 7A.

While the adhesive resin conveying roller 7A is immersed in the adhesive resin tank 8 filled with the adhesive resin 8a, the resin filling portions 179 (179A, 179C, and 179E) are filled with the adhesive resin 8a from the openings of the side surfaces of the guide rollers 171a and 171b of the adhesive resin conveying roller 7A. The resin application hole 174 (174A, 174C, and 174E) provided in the partition plate 173 (173a to 173c) is also filled with the adhesive resin 8a.

When the adhesive resin conveying roller 7A is taken out from the adhesive resin tank 8, the resin removing member 9 is brought press-contact with the peripheral edge portion of each fiber roller 172 (172a to 172d) and the adhesive resin 8a is removed. However, the resin filling portion 179 (179A, 179C, and 179E) and the resin application hole 174 (174A, 174C, 174E) are filled with the adhesive resin 8a.

In the region A, the resin application hole 174A is provided only in the partition plate 173a sandwiched between the optical fibers 21 and 22. Since the resin application hole 174A is connected to the resin filling portion 179A through the flow path 175A, the adhesive resin 8a is further supplied to the resin application hole 174A from the resin filling portion 179A. In the region A, the adhesive resin 8a is released between the optical fibers 21 and 22 from the resin application hole 174A and is applied between the optical fibers 21 and 22.

In the region B, since the resin application hole 174 is present in the partition plates 173a to 173c, the adhesive resin 8a is not applied to each optical fiber.

Since the resin application hole 174C is connected to the resin filling portion 179C through the flow path 175C, the adhesive resin 8a is further supplied to the resin application hole 174C from the resin filling portion 179C. In the region C, the adhesive resin 8a is released between the optical fibers 23 and 24 from the resin application hole 174C and is applied between the optical fibers 23 and 24.

In the region D, since the resin application hole 174 is not present in the partition plates 173a to 173c, the adhesive resin 8a is not applied to each optical fiber.

Since the resin application hole 174E is connected to the resin filling portion 179E through the flow path 175E, the adhesive resin 8a is further supplied to the resin application hole 174E from the resin filling portion 179E. In the region E, the adhesive resin 8a is released between the optical fibers 22 and 23 from the resin application hole 174E and is applied between the optical fibers 22 and 23.

In the region F, since the resin application hole is not present in the partition plates 173a to 173c, the adhesive resin 8a is not applied to each optical fiber.

When the adhesive resin conveying roller 7A rotates once, the adhesive resin 8a is applied by the regions A to F again and the operation is repeated.

In a state where the adhesive resin is intermittently applied to the optical fibers 21 to 24 to which the adhesive resin 8a is applied by the adhesive resin conveying roller 7A at desired intervals as shown in Figs. 5 and 6, the optical fibers are sent to the downstream-side arrangement correction roller 10.

By passing through the downstream-side arrangement correction roller 10, the optical fibers 21 to 24 are corrected to be arranged in parallel and are sent to the adhesive resin curing device 11.

In the optical fibers 21 to 24 which have been corrected to be arranged in parallel, the applied adhesive resin 8a is cured by the adhesive resin curing device 11 (for example, in a case where the adhesive resin 8a is an ultraviolet curable resin, an optical fibers 21 to 24 are irradiated with ultraviolet rays from the adhesive resin curing device 11 to cure the adhesive resin 8a).

The optical fibers 21 to 24 in which the adhesive resin 8a has been cured by the adhesive resin curing device 11 are taken up by the take-up bobbin 12 as an intermittent connection-type optical fiber ribbon 20 in which the optical fibers are intermittently connected in a desired shape as shown in Fig. 5.

As described above, according to the apparatus 1A for manufacturing an optical fiber ribbon and the method for manufacturing an optical fiber ribbon according to the second embodiment described in detail, while the running optical fibers 21 to 24 are brought into contact with the partition plate 173 and the fiber roller 172, the adhesive resin 8a is removed from the peripheral edge portion of the fiber roller 172 by the resin removing member 9, and thus, the adhesive resin 8a is not applied to the contact surfaces of the optical fibers 21 to 24 with respect to the fiber roller 172.

However, in the portion of the partition plate 173 provided with the resin application hole 174, the adhesive resin 8a is applied to the side surfaces of the optical fibers 21 to 24 adjacent to the partition plate 173. Therefore, the portion provided with the resin application hole 174 and the portion provided with the resin application hole 174 in the partition plate 173 are brought into contact with the optical fibers 21 to 24, and thus the adhesive resin 8a can be intermittently applied between the optical fibers.

When the adhesive resin conveying roller 7A is immersed in the adhesive resin tank 8 while rotating, the resin application hole 174 provided in the partition plate 173 is filled with the adhesive resin 8a and the resin filling portion 179 opened at the side surface of the adhesive resin conveying roller 7A is filled with the adhesive resin 8a. Thus, even when the adhesive resin conveying roller 7A rotates, the resin can be held. Since the resin application hole 174 communicates with the resin filling portion 179, the adhesive resin 8a can be reliably supplied to the resin application hole 174 even when the adhesive resin conveying roller 7A is rotated at a high speed. Accordingly, an intermittent connection-type optical fiber ribbon 20 in which the optical fibers are intermittently connected in a desired shape can be manufactured by allowing the optical fibers 21 to 24 to run at a high speed, the manufacturing time can be reduced, and the manufacturing cost can be reduced.

In addition, since the positions of the optical fibers 21 to 24 are fixed by the adhesive resin conveying roller 7A, a precise mechanism for improving the positioning accuracy is not required. Since the adhesive resin 8a is supplied simply by immersing the adhesive resin conveying roller 7A in the uncured adhesive resin 8a which is stored in the adhesive resin tank 8 while rotating the adhesive resin conveying roller 7A, a mechanism for intermittently supplying the adhesive resin 8a is not required.

As described above, according to the second embodiment, it is possible to manufacture an intermittent connection-type optical fiber ribbon 20 in which the optical fibers are intermittently connected in a desired shape by allowing the optical fibers 21 to 24 to run at a high speed without increasing the manufacturing cost.

In addition, since the driving unit 5 for rotating the adhesive resin conveying roller 7A is provided, the adhesive resin conveying roller 7A is driven by power and thus the intermittent connection pitch of the optical fiber ribbon 20 can be arbitrarily changed without changing the diameter of the roller.

Further, the sensor 3 for detecting the running speed of the optical fibers 21 to 24 is disposed on the upstream side of the pass line P from the adhesive resin conveying roller 7A to detect the running speed. The rotational speed of the adhesive resin conveying roller 7A may be controlled using information on the running speed detected by the sensor 3. In this case, even when the running speed of the optical fibers 21 to 24 is changed, a desired intermittent connection pitch of the optical fiber ribbon 20 can be stably realized.

The adhesive resin conveying roller 7A may be installed so as to be rotated by friction with the plurality of optical fibers 21 to 24 without being driven by the driving unit 5.

In this case, since the adhesive resin conveying roller 7A is not driven by power but rotated by friction with the plurality of optical fibers 21 to 24, slippage between the roller and the optical fibers is minimized and damage to the surface of the optical fibers can be prevented. Even when the running speed of the optical fibers 21 to 24 is changed, the rotational speed of the adhesive resin conveying roller 7A is also changed according to the changed running speed and thus the intermittent connection pitch is stabilized.

In the second embodiment, the plurality of optical fibers are four optical fibers. However, as long as a plurality of optical fibers are provided, the number of optical fibers may be other than four. In this case, the adhesive resin conveying roller 7A may be configured to match the number of optical fibers (the number of fiber rollers 172 and partition plates 173 is matched). In addition, although the partition plate 173 is divided into the regions A to F, numbers of regions and dividing methods other than the above number and dividing method may be adopted.

### Reference Signs List

1, 1A: Manufacturing Apparatus
2: Supply Bobbin Group
2a to 2d: Supply Bobbin
3: Sensor
4: Control Unit
5: Driving Unit
6: Upstream-side Arrangement Correction Roller
7, 7A: Adhesive Resin Conveying Roller
8: Adhesive Resin Tank
8a: Adhesive Resin
9: Resin Removing Member
10: Downstream-side Arrangement Correction Roller
11: Adhesive Resin Curing Device
12: Take-Up Bobbin
20: Optical Fiber Ribbon
21 to 24: Optical Fiber
71a, 71b: Guide Roller
72, 72a to 72d: Fiber Roller
73, 73a to 73c: Partition Plate
74: Gap Portion
74a: Slit
74b: Hole
171a, 171b: Guide Roller
172, 172a to 172d: Fiber Roller
173, 173a to 173c: Partition Plate
174, 174A, 174C, 174E: Resin Application Hole
175, 175A, 175C, 175E: Flow Path
176, 176A, 176C, 176E: Opening Portion
177, 177A, 177C, 177E: Opening Portion
178, 178A, 178C, 178E: Opening Portion
179, 179A, 179C, 179E: Resin Filling Portion

## Claims

1. A method for manufacturing an optical fiber ribbon (20) as a method for manufacturing an intermittent connection-type optical fiber ribbon (20), the method comprising steps of:
intermittently applying an adhesive resin (8A) between adjacent optical fibers of a plurality of optical fibers in the middle of a pass line in a longitudinal direction by arranging the plurality of optical fibers in parallel to allow the optical fibers to run on the pass line; and
curing the adhesive resin (8A), wherein
the step of intermittently applying the adhesive resin (8A) is a step of, while rotating an adhesive resin conveying roller (7, 7A), which is formed by alternately laminating a disk-like fiber roller (72) installed in the pass line, a disk-like partition plate (73) having a diameter, which is constant in a circumferential direction, larger than that of the fiber roller (72) and including a gap portion (74) for holding the adhesive resin (8A) in a part of the vicinity of a peripheral edge portion in a circumferential direction, immersing the adhesive resin conveying roller (7, 7A) in the adhesive resin (8A), which is not cured, to hold the adhesive resin (8A) in the gap portion (74), and then removing the adhesive resin (8A) attached to the peripheral edge portion of the fiber roller (72) and brining the optical fibers into contact with the partition plate (73) such that the partition plate (73) is sandwiched between the optical fibers in running, so as to intermittently apply the adhesive resin (8A) held in the gap portion (74) to the optical fibers in the longitudinal direction.

2. The method for manufacturing an optical fiber ribbon (20) according to claim 1, wherein
the gap portion (74) is a slit provided in the vicinity of the peripheral edge portion of the partition plate (73).

3. The method for manufacturing an optical fiber ribbon (20) according to claim 1, wherein
the gap portion (74) includes at least one hole provided in the vicinity of the peripheral edge portion of the partition plate (73).

4. The method for manufacturing an optical fiber ribbon (20) according to claim 1, wherein
the adhesive resin conveying roller (7, 7A) is formed by laminating a disk-like fiber roller (72) provided with an opening portion in the vicinity of the center, and a disk-like partition plate (73) having a diameter larger than that of the fiber roller (72) and including at least one resin application hole (174) provided in a part of the vicinity of the peripheral edge portion and an opening portion provided at the center, and further includes a disk-like guide roller (71a, 71b) provided so as to hold outer surfaces of the fiber rollers (72) at both ends therebetween and including an opening portion in the vicinity of the center,
the opening portion of the fiber roller (72), the opening portion of the partition plate (73), and the opening portion of the guide roller communicate with each other to form a resin filling portion (179), and the resin filling portion (179) and the resin application hole (174) communicate with each other, and
the method further includes a filling step of filling the resin filling portion (179) with the adhesive resin (8A) from the opening portion on a side surface of the guide roller by immersing the adhesive resin conveying roller (7, 7A) in the uncured adhesive resin (8A) while rotating the adhesive resin conveying roller (7, 7A).

5. The method for manufacturing an optical fiber ribbon (20) according to any one of claims 1 to 4, wherein
the adhesive resin conveying roller (7, 7A) is driven to rotate by power.

6. The method for manufacturing an optical fiber ribbon (20) according to claim 5, wherein
a sensor for detecting a running speed of the optical fiber is arranged on an upstream side of the pass line from the adhesive resin conveying roller (7, 7A), and
a rotational speed of the adhesive resin conveying roller (7, 7A) is controlled using information on the running speed detected by the sensor.

7. The method for manufacturing an optical fiber ribbon (20) according to any one of claims 1 to 4, wherein
the adhesive resin conveying roller (7, 7A) is not driven by power but rotated by friction with the plurality of optical fibers.

8. An apparatus for manufacturing an optical fiber ribbon (20) as a method for manufacturing an intermittent connection-type optical fiber ribbon (20), the apparatus comprising:
a device for intermittently applying an adhesive resin (8A) between adjacent optical fibers of a plurality of optical fibers in the middle of a pass line in a longitudinal direction by arranging the plurality of optical fibers in parallel to allow the optical fibers to run on the pass line; and
a device for curing the adhesive resin (8A), wherein
the device for intermittently applying the adhesive resin (8A) includes
an adhesive resin conveying roller (7, 7A) comprising an alternately laminated disc-like fiber roller (72) installed in the pass line, a disk-like partition plate (73) having a diameter, which is constant in a circumferential direction, larger than that of the fiber roller (72) and including a gap portion (74) for holding the adhesive resin (8A) in a part of the vicinity of the peripheral edge portion in a circumferential direction, and
an adhesive resin tank which stores the adhesive resin (8A) and a resin removing member (9) which is configured to remove, when the adhesive resin (8A) is intermittently applied, the adhesive resin (8A) attached to the peripheral edge portion of the fiber roller (72).

9. The apparatus for manufacturing an optical fiber ribbon (20) according to claim 8, wherein
the gap portion (74) is a slit provided in the vicinity of the peripheral edge portion of the partition plate (73).

10. The apparatus for manufacturing an optical fiber ribbon (20) according to claim 8, wherein
the gap portion (74) includes at least one hole provided in the vicinity of the peripheral edge portion of the partition plate (73).

11. The apparatus for manufacturing an optical fiber ribbon (20) according to claim 8, wherein
the adhesive resin conveying roller (7, 7A) comprises an alternately laminated disc-like fiber roller (72) provided with an opening portion in the vicinity of the center, and
a disk-like partition plate (73) having a diameter larger than that of the fiber roller (72) and including at least one resin application hole (174) provided in a part of the vicinity of the peripheral edge portion and an opening portion provided at the center, and further includes a disk-like guide roller provided so as to hold outer surfaces of the fiber rollers (72) at both ends therebetween and including an opening portion in the vicinity of the center, and
the opening portion of the fiber roller, the opening portion of the partition plate (73), and the opening portion of the guide roller communicate with each other to form a resin filling portion (179), and the resin filling portion (179) and the resin application hole (174) communicate with each other.

12. The apparatus for manufacturing an optical fiber ribbon (20) according to any one of claims 8 to 11, further comprising:
a driving unit which rotates the adhesive resin conveying roller (7, 7A).

13. The apparatus for manufacturing an optical fiber ribbon (20) according to claim 12, further comprising:
a sensor which is arranged on an upstream side of the pass line from the adhesive resin conveying roller (7, 7A) to detect a running speed of the optical fiber, and
a control unit which controls the driving unit using information on the running speed detected by the sensor.

14. The apparatus for manufacturing an optical fiber ribbon (20) according to any one of claims 8 to 11, wherein
the adhesive resin conveying roller (7, 7A) is installed so as to be rotated by friction with the optical fibers.

## Patentansprüche

1. Verfahren zum Herstellen eines Glasfaserbands (20) als ein Verfahren zum Herstellen eines Glasfaserbands (20) vom Typ mit unterbrochenem Anschluss, wobei das Verfahren die folgenden Schritte umfasst:
unterbrochenes Auftragen eines Klebeharzes (8A) zwischen angrenzenden Glasfasern aus einer Vielzahl von Glasfasern in der Mitte einer Durchgangslinie in einer Längsrichtung durch paralleles Anordnen der Vielzahl von Glasfasern, um den Glasfasern zu erlauben, auf der Durchgangslinie zu verlaufen; und
Aushärten des Klebeharzes (8A), wobei
es sich bei dem Schritt des unterbrochenen Auftragens des Klebeharzes (8A) um einen Schritt handelt, während eine Klebeharzförderwalze (7, 7A) gedreht wird, die gebildet wird durch abwechselndes Beschichten einer in der Durchgangslinie angebrachten scheibenartigen Faserwalze (72), einer scheibenartigen Teilungsplatte (73), die einen Durchmesser aufweist, der in einer Umlaufrichtung konstant ist, der größer ist als jener der Faserwalze (72), und die einen Spaltabschnitt (74) zum Halten des Klebeharzes (8A) in einem Teil der Nähe eines Umfangsrandabschnitts in der Umlaufrichtung einschließt, des Eintauchens der Klebeharzförderwalze (7, 7A) in das Klebeharz (8A), das nicht ausgehärtet ist, um das Klebeharz (8A) im Spaltabschnitt (74) zu halten, und dann des Entfernens des am Umfangsrandabschnitt der Faserwalze (72) haftenden Klebeharzes (8A) und des In-Kontakt-bringens der Glasfasern mit der Teilungsplatte (73), sodass die Teilungsplatte (73) zwischen den laufenden Glasfasern derart eingeklemmt wird, dass das im Spaltabschnitt (74) gehaltene Klebeharz (8A) unterbrochen an den Glasfasern in der Längsrichtung aufgetragen wird.

2. Verfahren zum Herstellen eines Glasfaserbands (20) nach Anspruch 1, wobei
der Spaltabschnitt (74) ein Schlitz ist, der in der Nähe des Umfangsrandabschnitts der Teilungsplatte (73) bereitgestellt wird.

3. Verfahren zum Herstellen eines Glasfaserbands (20) nach Anspruch 1, wobei
der Spaltabschnitt (74) mindestens ein Loch einschließt, das in der Nähe des Umfangsrandabschnitts der Teilungsplatte (73) bereitgestellt wird.

4. Verfahren zum Herstellen eines Glasfaserbands (20) nach Anspruch 1, wobei
die Klebeharzförderwalze (7, 7A) gebildet wird durch Beschichten einer scheibenartigen Faserwalze (72), die mit einem Öffnungsabschnitt in der Nähe des Mittelpunkts bereitgestellt ist, und einer scheibenartigen Teilungsplatte (73), die einen größeren Durchmesser als jenen der Faserwalze (72) aufweist und mindestens ein in einem Teil der Nähe des Umfangsrandabschnitts bereitgestelltes Harzauftragungsloch (174) und einen am Mittelpunkt bereitgestellten Öffnungsabschnitt einschließt, und weiter eine scheibenartige Führungswalze (71a, 71b) einschließt, die derart bereitgestellt ist, dass Außenflächen der Faserwalzen (72) an beiden Enden dazwischen gehalten werden, und die einen Öffnungsabschnitt in der Nähe des Mittelpunkts einschließt,
der Öffnungsabschnitt der Faserwalze (72), der Öffnungsabschnitt der Teilungsplatte (73) und der Öffnungsabschnitt der Führungswalze miteinander in Verbindung stehen, um einen Harzfüllabschnitt (179) zu bilden, und der Harzfüllabschnitt (179) und das Harzauftragsloch (174) miteinander in Verbindung stehen, und
das Verfahren weiter einen Füllschritt des Füllens des Harzfüllabschnitts (179) mit dem Klebeharz (8A) aus dem Öffnungsabschnitt auf einer Seitenfläche der Führungswalze durch Eintauchen der Klebeharzförderwalze (7, 7A) in das nicht ausgehärtete Klebeharz (8A), während die Klebeharzförderwalze (7, 7A) gedreht wird, einschließt.

5. Verfahren zum Herstellen eines Glasfaserbands (20) nach einem der Ansprüche 1 bis 4, wobei
die Klebeharzförderwalze (7, 7A) durch Energie zum Drehen angetrieben wird.

6. Verfahren zum Herstellen eines Glasfaserbands (20) nach Anspruch 5, wobei
ein Sensor zum Erfassen einer Laufgeschwindigkeit der Glasfaser auf einer stromaufwärtigen Seite der Durchgangslinie von der Klebeharzförderwalze (7, 7A) aus angeordnet ist, und
eine Drehgeschwindigkeit der Klebeharzförderwalze (7, 7A) durch Verwenden von Informationen über die von dem Sensor erfasste Laufgeschwindigkeit gesteuert wird.

7. Verfahren zum Herstellen eines Glasfaserbands (20) nach einem der Ansprüche 1 bis 4, wobei
die Klebeharzförderwalze (7, 7A) nicht durch Energie angetrieben wird, sondern durch Reibung mit der Vielzahl von Glasfasern gedreht wird.

8. Einrichtung zum Herstellen eines Glasfaserbands (20) als ein Verfahren zum Herstellen eines Glasfaserbands (20) vom Typ mit unterbrochenem Anschluss, wobei die Einrichtung umfasst:
eine Vorrichtung zum unterbrochenen Auftragen eines Klebeharzes (8A) zwischen angrenzenden Glasfasern aus einer Vielzahl von Glasfasern in der Mitte einer Durchgangslinie in einer Längsrichtung durch paralleles Anordnen der Vielzahl von Glasfasern, um den Glasfasern zu erlauben, auf der Durchgangslinie zu verlaufen; und
eine Vorrichtung zum Aushärten des Klebeharzes (8A), wobei
die Vorrichtung zum unterbrochenen Auftragen des Klebeharzes (8A) einschließt
eine Klebeharzförderwalze (7, 7A), umfassend eine abwechselnd beschichtete scheibenartige Faserwalze (72), die in der Durchgangslinie angebracht ist, eine scheibenartige Teilungsplatte (73), die einen Durchmesser aufweist, der in einer Umlaufrichtung konstant ist, der größer ist als jener der Faserwalze (72), und die einen Spaltabschnitt (74) zum Halten des Klebeharzes (8A) in einem Teil der Nähe des Umfangsrandabschnitts in der Umlaufrichtung einschließt, und
einen Klebeharztank, der das Klebeharz (8A) lagert und
ein Harzentfernungselement (9), das konfiguriert ist, das Klebeharz (8A), das am Umfangsrandabschnitt der Faserwalze (72) haftet, zu entfernen, wenn das Klebeharz (8A) unterbrochen aufgetragen wird.

9. Einrichtung zum Herstellen eines Glasfaserbands (20) nach Anspruch 8, wobei
der Spaltabschnitt (74) ein Schlitz ist, der in der Nähe des Umfangsrandabschnitts der Teilungsplatte (73) bereitgestellt wird.

10. Einrichtung zum Herstellen eines Glasfaserbands (20) nach Anspruch 8, wobei
der Spaltabschnitt (74) mindestens ein Loch einschließt, das in der Nähe des Umfangsrandabschnitts der Teilungsplatte (73) bereitgestellt wird.

11. Einrichtung zum Herstellen eines Glasfaserbands (20) nach Anspruch 8, wobei
die Klebeharzförderwalze (7, 7A) eine abwechselnd beschichtete scheibenartige Faserwalze (72), die mit einem Öffnungsabschnitt in der Nähe des Mittelpunkts bereitgestellt ist, und eine scheibenartige Teilungsplatte (73) umfasst, die einen größeren Durchmesser als jenen der Faserwalze (72) aufweist und mindestens ein in einem Teil der Nähe des Umfangsrandabschnitts bereitgestelltes Harzauftragungsloch (174) und einen am Mittelpunkt bereitgestellten Öffnungsabschnitt einschließt, und weiter eine scheibenartige Führungswalze einschließt, die derart bereitgestellt ist, dass Außenflächen der Faserwalzen (72) an beiden Enden dazwischen gehalten werden, und die einen Öffnungsabschnitt in der Nähe des Mittelpunkts einschließt, und
der Öffnungsabschnitt der Faserwalze, der Öffnungsabschnitt der Teilungsplatte (73) und der Öffnungsabschnitt der Führungswalze miteinander in Verbindung stehen, um einen Harzfüllabschnitt (179) zu bilden, und der Harzfüllabschnitt (179) und das Harzauftragsloch (174) miteinander in Verbindung stehen.

12. Einrichtung zum Herstellen eines Glasfaserbands (20) nach einem der Ansprüche 8 bis 11, weiter umfassend:
eine Antriebseinheit, die die Klebeharzförderwalze (7, 7A) dreht.

13. Einrichtung zum Herstellen eines Glasfaserbands (20) nach Anspruch 12, weiter umfassend:
einen Sensor, der auf einer stromaufwärtigen Seite der Durchgangslinie von der Klebeharzförderwalze (7, 7A) aus angeordnet ist, um eine Laufgeschwindigkeit der Glasfaser zu erfassen, und
eine Steuereinheit, die die Antriebseinheit durch Verwenden von Informationen über die von dem Sensor erfasste Laufgeschwindigkeit steuert.

14. Einrichtung zum Herstellen eines Glasfaserbands (20) nach einem der Ansprüche 8 bis 11, wobei
die Klebeharzförderwalze (7, 7A) derart angebracht ist, dass sie durch Reibung mit den Glasfasern gedreht wird.

## Revendications

1. Procédé de fabrication d'un ruban de fibre optique (20) en tant que procédé de fabrication d'un ruban de fibre optique (20) de type à connexion intermittente, le procédé comprenant des étapes consistant à :
appliquer par intermittence une résine adhésive (8A) entre des fibres optiques adjacentes d'une pluralité de fibres optiques au milieu d'une ligne de passage dans une direction longitudinale en agençant la pluralité de fibres optiques en parallèle pour permettre aux fibres optiques de s'étendre sur la ligne de passage ; et
faire durcir la résine adhésive (8A), dans lequel
l'étape consistant à appliquer par intermittence la résine adhésive (8A) est une étape consistant à, tout en faisant tourner un rouleau de transport de résine adhésive (7, 7A), qui est formé en stratifiant alternativement un rouleau de fibres (72) du type disque installé dans la ligne de passage, une plaque de séparation (73) du type disque présentant un diamètre, qui est constant dans une direction circonférentielle, plus grand que celui du rouleau de fibres (72) et incluant une portion interstice (74) pour retenir la résine adhésive (8A) dans une partie du voisinage d'une portion de bord périphérique dans une direction circonférentielle, plonger le rouleau de transport de résine adhésive (7, 7A) dans la résine adhésive (8A), qui n'est pas durcie, pour retenir la résine adhésive (8A) dans la portion interstice (74), et ensuite retirer la résine adhésive (8A) attachée à la portion de bord périphérique du rouleau de fibres (72) et mettre les fibres optiques en contact avec la plaque de séparation (73) de telle sorte que la plaque de séparation (73) soit prise entre les fibres optiques lors d'une extension, de façon à appliquer par intermittence la résine adhésive (8A) retenue dans la portion interstice (74) sur les fibres optiques dans la direction longitudinale.

2. Procédé de fabrication d'un ruban de fibre optique (20) selon la revendication 1, dans lequel
la portion interstice (74) est une fente prévue dans le voisinage de la portion de bord périphérique de la plaque de séparation (73).

3. Procédé de fabrication d'un ruban de fibre optique (20) selon la revendication 1, dans lequel
la portion interstice (74) inclut au moins un trou prévu dans le voisinage de la portion de bord périphérique de la plaque de séparation (73).

4. Procédé de fabrication d'un ruban de fibre optique (20) selon la revendication 1, dans lequel
le rouleau de transport de résine adhésive (7, 7A) est formé en stratifiant un rouleau de fibres (72) du type disque pourvu d'une portion d'ouverture dans le voisinage du centre, et une plaque de séparation (73) du type disque présentant un diamètre plus grand que celui du rouleau de fibres (72) et incluant au moins un trou d'application de résine (174) prévu dans une partie du voisinage de la portion de bord périphérique et une portion d'ouverture prévue au centre, et inclut en outre un rouleau de guidage (71a, 71b) du type disque prévu de façon à retenir des surfaces extérieures des rouleaux de fibres (72) aux deux extrémités entre ceux-ci et incluant une portion d'ouverture dans le voisinage du centre,
la portion d'ouverture du rouleau de fibres (72), la portion d'ouverture de la plaque de séparation (73) et la portion d'ouverture du rouleau de guidage communiquent les unes avec les autres pour former une portion à remplissage de résine (179), et la portion à remplissage de résine (179) et le trou d'application de résine (174) communiquent l'un avec l'autre, et
le procédé inclut en outre une étape de remplissage consistant à remplir la portion à remplissage de résine (179) avec la résine adhésive (8A) à partir de la portion d'ouverture sur une surface latérale du rouleau de guidage en plongeant le rouleau de transport de résine adhésive (7, 7A) dans la résine adhésive (8A) non durcie tout en faisant tourner le rouleau de transport de résine adhésive (7, 7A).

5. Procédé de fabrication d'un ruban de fibre optique (20) selon l'une quelconque des revendications 1 à 4, dans lequel
le rouleau de transport de résine adhésive (7, 7A) est entraîné pour tourner par de l'énergie.

6. Procédé de fabrication d'un ruban de fibres optiques (20) selon la revendication 5, dans lequel
un capteur pour détecter une vitesse d'extension de la fibre optique est agencé sur un côté en amont de la ligne de passage à partir du rouleau de transport de résine adhésive (7, 7A), et
une vitesse de rotation du rouleau de transport de résine adhésive (7, 7A) est commandée à l'aide d'informations sur la vitesse d'extension détectée par le capteur.

7. Procédé de fabrication d'un ruban de fibre optique (20) selon l'une quelconque des revendications 1 à 4, dans lequel
le rouleau de transport de résine adhésive (7, 7A) n'est pas entraîné par de l'énergie mais tourne par frottement avec la pluralité de fibres optiques.

8. Appareil pour fabriquer un ruban de fibre optique (20) en tant que procédé de fabrication d'un ruban de fibre optique (20) de type à connexion intermittente, l'appareil comprenant :
un dispositif pour appliquer par intermittence une résine adhésive (8A) entre des fibres optiques adjacentes d'une pluralité de fibres optiques au milieu d'une ligne de passage dans une direction longitudinale en agençant la pluralité de fibres optiques en parallèle pour permettre aux fibres optiques de s'étendre sur la ligne de passage ; et
un dispositif pour faire durcir la résine adhésive (8A), dans lequel
le dispositif pour appliquer par intermittence la résine adhésive (8A) inclut
un rouleau de transport de résine adhésive (7, 7A) comprenant un rouleau de fibres (72) du type disque stratifié alternativement installé dans la ligne de passage, une plaque de séparation (73) du type disque présentant un diamètre, qui est constant dans une direction circonférentielle, plus grand que celui du rouleau de fibres (72) et incluant une portion interstice (74) pour retenir la résine adhésive (8A) dans une partie du voisinage de la portion de bord périphérique dans une direction circonférentielle, et
un réservoir de résine adhésive qui stocke la résine adhésive (8A) et
un élément de retrait de résine (9) qui est configuré pour retirer, lorsque la résine adhésive (8A) est appliquée par intermittence, la résine adhésive (8A) attachée à la portion de bord périphérique du rouleau de fibres (72).

9. Appareil pour fabriquer un ruban de fibre optique (20) selon la revendication 8, dans lequel
la portion interstice (74) est une fente prévue dans le voisinage de la portion de bord périphérique de la plaque de séparation (73).

10. Appareil pour fabriquer un ruban de fibre optique (20) selon la revendication 8, dans lequel
la portion interstice (74) inclut au moins un trou prévu dans le voisinage de la portion de bord périphérique de la plaque de séparation (73).

11. Appareil pour fabriquer un ruban de fibre optique (20) selon la revendication 8, dans lequel
le rouleau de transport de résine adhésive (7, 7A) comprend un rouleau de fibres (72) du type disque stratifié alternativement pourvu d'une portion d'ouverture dans le voisinage du centre, et
une plaque de séparation (73) du type disque présentant un diamètre plus grand que celui du rouleau de fibres (72) et incluant au moins un trou d'application de résine (174) prévu dans une partie du voisinage de la portion de bord périphérique et une portion d'ouverture prévue au centre, et inclut en outre un rouleau de guidage du type disque prévu de façon à retenir des surfaces extérieures des rouleaux de fibres (72) aux deux extrémités entre ceux-ci et incluant une portion d'ouverture dans le voisinage du centre, et
la portion d'ouverture du rouleau de fibres, la portion d'ouverture de la plaque de séparation (73) et la portion d'ouverture du rouleau de guidage communiquent les unes avec les autres pour former une portion à remplissage de résine (179), et la portion à remplissage de résine (179) et le trou d'application de résine (174) communiquent l'un avec l'autre.

12. Appareil pour fabriquer un ruban de fibre optique (20) selon l'une quelconque des revendications 8 à 11, comprenant en outre :
une unité d'entraînement qui fait tourner le rouleau de transport de résine adhésive (7, 7A).

13. Appareil pour fabriquer un ruban de fibre optique (20) selon la revendication 12, comprenant en outre :
un capteur qui est agencé sur un côté en amont de la ligne de passage à partir du rouleau de transport de résine adhésive (7, 7A) pour détecter une vitesse d'extension de la fibre optique, et
une unité de commande qui commande l'unité d'entraînement à l'aide d'informations sur la vitesse d'extension détectée par le capteur.

14. Appareil pour fabriquer un ruban de fibre optique (20) selon l'une quelconque des revendications 8 à 11, dans lequel
le rouleau de transport de résine adhésive (7, 7A) est installé de façon à tourner par frottement avec les fibres optiques.
